# EUROPÄISCHE PATENTSCHRIFT

(11) **EP 0 950 345 B1**
(45) Veröffentlichungstag und Bekanntmachung des Hinweises auf die Patenterteilung: **23.10.2002**
(21) Anmeldenummer: 99100848.3
(22) Anmeldetag: 19.01.1999
(51) Int. Cl.: A01D 25/04, A01D 25/00

(54) **Antriebsvorrichtung für Hubräder mit Paddelanordnung bei mehrreihigen Rübenerntemaschinen**
Drivingsystem for the liftingwheels with beater paddles in plural lines beetharvesters
Dispositif d' entrainement pour les roues arracheurs avec palettes d' éjection dans des récolteuses à betteraves multirangs

(30) Priorität: 18.04.1998 DE 19817322
(43) Veröffentlichungstag der Anmeldung: 20.10.1999
(73) Patentinhaber: Holmer, Alfons, 84069 Eggmühl (DE)
(72) Erfinder: Holmer, Alfons, 84069 Eggmühl (DE)
(74) Vertreter: Wasmeier, Alfons, Dipl.-Ing.

(56) Entgegenhaltungen:
- EP-A- 0 102 016
- WO-A-89/07387
- US-A- 2 993 545

## Beschreibung

Die Erfindung betrifft eine Antriebsvorrichtung nach dem Oberbegriff des Patentanspruches 1.

Die US-PS 29 93 545 zeigt eine Hubradanordnung bestehend aus einem Paar von schräg zueinander gestellten Hubrädern mit einer Rübenleitvorrichtung in Form eines Rübenkanals. Der Antrieb der Hubräder erfolgt über Kette und Zahnräder, die Abgabevorruchtung der Rüben von den Hubrädern ist als Kettenfördervorrichtung ausgebildet. Eine derartige Hubradanordnung weist einen offenen und damit im Betrieb sehr stör- und verschleißanfälligen Antrieb auf, der weitgehend ungeschützt ist und der als Einzelantrieb ausgelegt ist.

Hubräder für Rübenemtemaschinen sind beispielsweise aus der DE 195 04 252.2 bekannt. Hieraus ist eine Rodevorrichtung für Rüben zu entnehmen, die pro Rübenreihe aus einem Paar von Platten- oder Zinkenscharen besteht und einem zugeordneten, die Rübe von zwei Seiten erfassenden und klemmenden, nach hinten hochfördernden Hubrad mit fingerartigen Ansätzen besteht. Die Schare greifen in das Erdreich ein, lockern die Rüben und heben die Rüben an. Die beiden Hubräder stehen in Aufsicht nach hinten und in Vorderansicht zum Boden hin, jeweils mit einem Zwischenraum, konvergierend V-förmig zueinander. Mindestens eines der Hubräder ist angetrieben; vorzugsweise sind beide Hubräder angetrieben.

Bei herkömmlichen Antriebsvorrichtungen dieser Art sind die Antriebswellen der Hubräder durchgehend ausgebildet ist und die Einzelwellen miteinander gekoppelt. Unabhängig davon werden die Paddel getrennt angetrieben. Da die Hubräder sehr hohem Verschleiß ausgesetzt sind, müssen sie häufig ausgewechselt werden. Dies stellt einen erheblichen Aufwand, sowohl in Hinblick auf die Kosten als auch auf die Arbeitszeit (wegen der schwierigen Zugänglichkeit) dar.

Desweiteren war es bisher erforderlich, die beiden Getriebewellen über Gelenkwellen miteinander zu verbinden, was einen hohen Verschleiß und zusätzliche Kosten mit sich bringt.

Aufgabe der Erfindung ist es, für die pro Rübenreihe jeweils aus zwei Hubradelementen bestehende Hubradanordnung einen besonders zweckmäßigen Antrieb, eine leichte und bequeme Austauschbarkeit des Antriebs und der Hubräder zu erzielen, Gelenkwellen und Kreuzgelenke zu vermeiden, und ein einfaches und effektives Getriebe zu schaffen.

Gemäß der Erfindung wird diese Aufgabe dadurch gelöst, daß der Antrieb der Hubradanordnungen pro Rübenreihe als Einzelantrieb und als Einheit ausgebildet ist, und daß den Hubrädern zugeordnete, durch Getriebe angetriebene Paddel über eine für sämtliche Rübenreihen gemeinsame Antriebswelle angetrieben sind.

Der Antrieb für die Paddel erfolgt über eine gemeinsame, durchgehende und geteilte Antriebswelle, auf der die einzelnen Getriebeanordnungen sitzen, die über Getriebeverbindungen die die Hubräder antreiben, so daß die einzelnen Hubradantriebe von der Hauptwelle ausgehen, und die einzelnen Hubräder antriebsmäßig nicht unmittelbar miteinander verbunden sind. Die Paddel umschließen zumindest teilweise die Paddelantriebe und sind so angeordnet, daß sie einen Abstand zwischen den beiden Paddelschaufeln einschließen, der so gewählt ist, daß die Rüben bei Normalmaß jeweils an diametral gegenüberliegenden Seiten mit den Paddeln in Eingriff kommen und die Wurzel der Rüben nicht erfaßt und damit auch nicht beschädigt wird.

Der jeweilige Paddelantrieb besteht aus einem Getrieberad mit beidseitigen Kugellagem, die auf der Hauptwelle sitzen. Die beiden Paddelelemente bilden auf der Hauptwelle aufsitzende Lagerschilde. In Umfangsrichtung sind drei Paddelelementpaare um jeweils um 120° versetzt angeordnet. Die radial inneren Teile der Paddel sind in Lagerkörpern festgeschraubt, die auf der Hauptantriebswelle sitzen und damit leicht lösbar befestigt sind.

Vom Paddelantrieb bzw. dem zentralen Getrieberad erfolgt der Antrieb über hintereinander geschaltete Stirnräder in zentraler Ausrichtung zur Längswelle auf ein zentrales Getrieberad des Hubradantriebes und von diesem über Winkelgetriebe, die beidseitig angeordnet sind, an Verbindungswellen zu den Hubrädern, die in Kugellagern laufen und die von zylindrischen Gehäusen umschlossen sind. Die beiden die Hubradachsen bildenden Wellen sitzen auf Lagerkörpern, die mit den Lagerschilden der beiden Hubradelemente verschraubt sind, und die beiden zu den Hubradelementen führenden Wellen, die im Winkel zur Horizontalen geneigt sind, sind nach außen über Dichtungen und Schraubverschlüsse abgedichtet. Damit bestehen keine Antriebsverbindungen zwischen benachbarten Hubrädern, und die Hubräder können auf einfache Weise einzeln ausgewechselt werden, ohne daß das jeweils benachbarte Hubrad davon beeinflußt wird. Das Auswechseln eines gesamten Hubrades erfolgt dabei durch Lösen von Befestigungsschrauben am Nabenkörper, der mit dem die Stirnräder aufnehmenden Gehäuse verbunden ist, so daß damit ein Wechsel auf schnelle, einfache und bequeme Weise ermöglicht wird.

Das die Stirnräder aufnehmende Gehäuse, das die Verbindung zwischen dem Paddelantrieb und dem Hubradantrieb darstellt, ist über Flansche mit einem Rahmenträger verbunden, der Halteschalen aufweist, die am Rahmen festgelegt sind und die Flanschverbindung tragen.

Mit der Erfindung wird somit eine Lösung vorgeschlagen, bei der eine durchgehende obere Antriebswelle vorhanden ist, die die Paddel aufnimmt. Von der Hauptantriebswelle aus erfolgt der Antrieb der Hubräder in Einzelbauweise, so daß eine Antriebsverbindung zwischen den einzelnen Hubrädern entfällt. Dabei kann die gesamte Antriebseinheit für die einzelnen Hubräder in der Höhe gefüht werden und auslenken, so daß im Hubradbereich zentrale Antriebswellen als starre Wellen entfallen und Kreuzgelenke eingespart werden können.

Nachstehend wird die Erfindung in Verbindung mit der Zeichnung anhand eines Auführungsbeispieles erläutert. Es zeigt:
- Fig. 1: einen Scharkörper mit zugeordnetem Hubrad und Antrieb in seitlicher Ansicht,
- Fig. 2: eine Schnittansicht einer Antriebsvorrichtung für Paddel und Hubrad, und
- Fig. 3: eine Schnittansicht durch mehrere nebeneinander angeordnete Einheiten, bestehend aus Hubrad und Paddel.

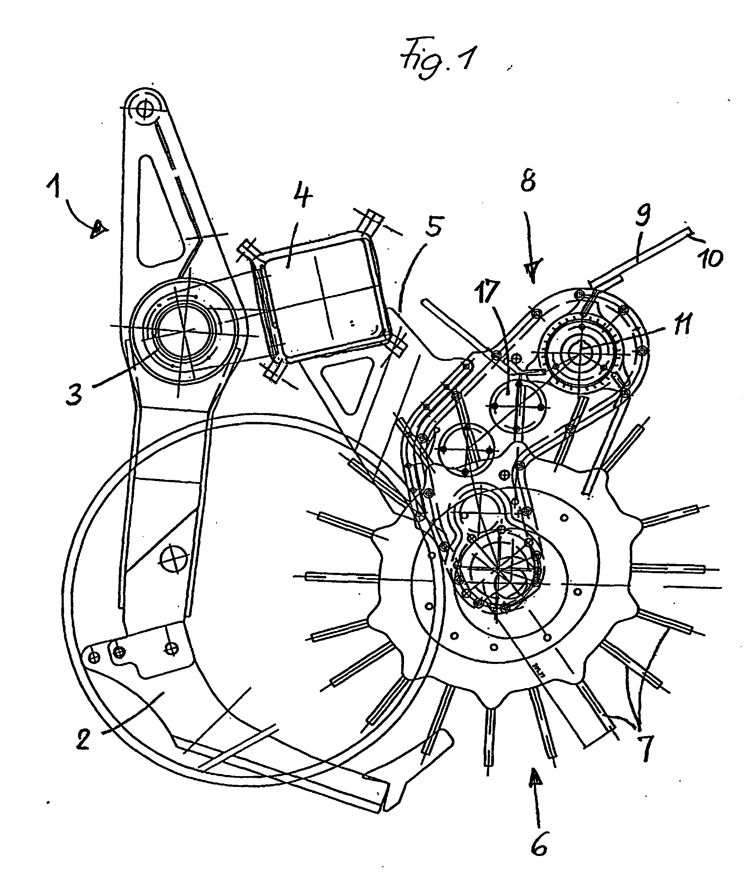

Aus Fig. 1 ergibt sich die Seitenansicht der erfindungsgemäßen Anordnung mit dem Scharkörper 1, dem Schargrindel 2 und der exzentrischen Lagerung 3 des Scharkörpers, der mit einem Rahmenteil 4 der Rübenemtemaschine befestigt ist. Am Rahmen 4 ist über einen Flansch 5 die Anordnung aus Hubrad 6 mit Fingern 7 und Getriebe 8 befestigt. Im oberen Abschnitt des Getriebes 8 ist ein Paddel 9 mit Paddelschaufeln auf einer durchgehenden Hauptwelle 11 gelagert.

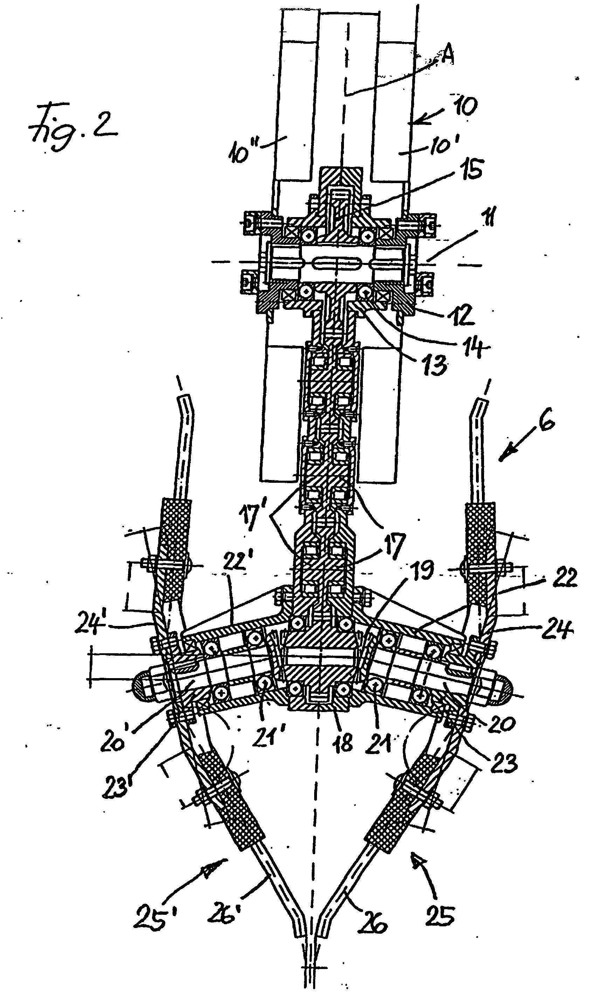

Diese Lagerung bzw. die Ausbildung des Getriebes ergibt sich im einzelnen aus Fig. 2. Auf der Hauptwelle 11 ist ein Lagerschild 12 festgelegt. Das Lagergehäuse 13 ruht auf auf der Antriebswelle 11 festgelegten Kugellagem 14. Die Welle 11 nimmt ferner ein zentrales Getrieberad 15 auf, das in der zentralen Achse 16 angeordnet ist, in der auch die von dem Getrieberad 15 angetriebene Serie von Stirnrädern 17 angetrieben wird, die ihrerseits ein zentrales Getrieberad 18 antreiben, von dem aus der Antrieb zu den Hubrädern erfolgt. Die Stirnräder 17 werden von einem Gehäuse 17' aufgenommen. Das Getrieberad 18 ist mit Winkeltrieben 19 gekoppelt, die beidseitig einen Abtrieb für die Wellen 20, 20' bilden, welche in Kugellagern 21, 21' gelagert sind und in zylindrischen Lagergehäusen 22, 22' untergebracht sind. Mit 23, 23' ist jeweils ein Träger für die Nabe 24, 24' der Hubradanordnung 25 mit den beiden Hubradelementen 26, 26' dargestellt. Die Ausbildung der Hubräder ist an sich bekannt, und wird hier nicht näher erläutert.

Mit einer derartigen Antriebsvorrichtung erfolgt der Antrieb der Paddel 10 über eine gemeinsame, durchgehende obere Antriebswelle, auf der sämtliche Paddel der mehrreihigen Rübenerntemaschine sitzen, wobei die Antriebswelle geteilt ist und durch flexible Kupplungen verbunden ist. Von diesem Paddelantrieb aus wird über eine mechanische Antriebsverbindung, nämlich die Stirnräder 17, der Einzelantrieb der Hubräder vorgenommen, wobei die beiden Hubradelemente von dem zentralen Antrieb aus gemeinsam angetrieben werden. Der Vorteil einer derartigen Antriebsart besteht darin, daß der Hubradantrieb als Einzelantrieb ausgebildet ist, und daß benachbarte Hubräder mechanisch nicht miteinander verbunden sind, d.h., keine Gelenkwellen die Hubradachsen miteinander verbinden, so daß der Antrieb dadurch wesentlich vereinfacht und wesentlich weniger aufwendig wird.

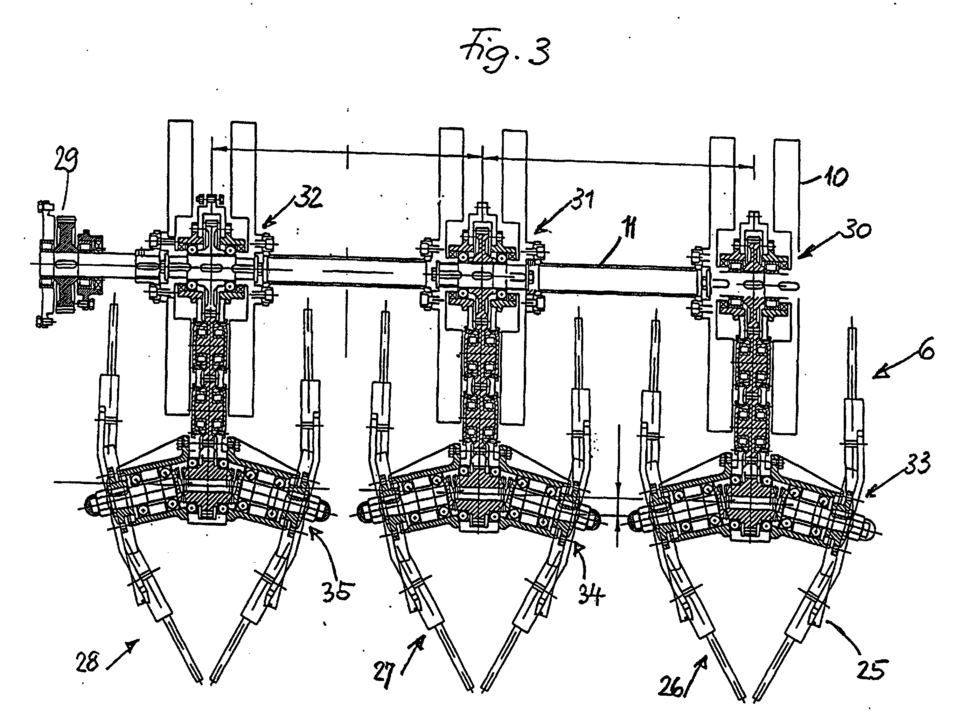

In Fig. 3 sind drei der in Fig. 2 dargestellten Antriebseinheiten 26, 27, 28 auf der gleichen gemeinsamen Hauptwelle 11 unmittelbar nebeneinander angeordnet. Die voneinander unabhängigen Antriebseinheiten sind einzeln auf der Hauptwelle abnehmbar gelagert. Die Hauptwelle 11 ist an ihren beiden Enden jeweils durch Hauptlager 29 gelagert. Die Paddelantriebe 30, 31, 32 auf der Hauptwelle 11 stehen über jeweils einen Stirnrad-antrieb 17 mit dem jeweiligen Hubradantrieb 32, 33, 34 in Verbindung, wobei die einzelnen Hubradantriebe keine Verbindung miteinander aufweisen und somit die einzelnen Hubradsysteme ausschließlich über die Hauptwelle und die Paddelantriebe angetrieben werden.

### Bezugszeichenliste

- 1: Scharkörper
- 2: Schargrindel
- 3: Exzenterantrieb
- 4: Rahmen
- 5: Tragflansch
- 6: Hubrad
- 7: Zinken
- 8: Getriebe
- 9: Paddel
- 10: Paddelschaufel
- 11: Hauptwelle
- 12: Lagerschild
- 13: Lager
- 14: Lagergehäuse
- 15: Getrieberad
- 16: Achse
- 17: Stirnräder
- 18: Getrieberad
- 19: Winkeltrieb
- 20: Welle
- 21: Lagerung
- 22: Lagergehäuse
- 23: Träger für
- 24: Hubradnabe
- 25: Hubrad
- 26, 27, 28: Hubradanordnung
- 29: Hauptwellenlagerung
- 30, 31, 32: Paddelgetriebe
- 33, 34, 35: Hubradgetriebe

## Patentansprüche

1. Antriebsvorrichtung für Hubräder (6; 25, 25') von mehrreihigen Rübenerntemaschinen, die Scharkörpern (1) zugeordnet sind und die von den Scharkörpern gerodete Rüben aufnehmen, hochfördern und abführen, wobei der Antrieb (33, 34, 35) der aus zwei miteinander zusammenwirkenden Hubeinzelrädern (25, 25') bestehenden Hubradanordng (26, 27, 28) als Einzelantrieb und als Einheit pro Hubradanordnung ausgebildet ist, und den Hubeinzelrädern zur Abförderung der Rüben zugeordnete, durch Getriebe (30, 31, 32) angetriebene Paddel (10) über eine gemeinsame Hauptantriebswelle (11) angetrieben sind,
**dadurch gekennzeichnet, dass** die Paddel (10) paarweise auf der Hauptantriebswelle (11) und außen am Gehäuse (13) des jeweiligen Paddelantriebs (30, 31, 32) befestigt sind.

2. Antriebsvorrichtung nach Anspruch 1, **dadurch gekennzeichnet, dass** die Paddelantriebe (30, 31, 32) jeweils über Stirnräder (17, 17') oder dergl. mit der Antriebswelle (20) für die beiden Hubradelemente (25, 25') einer Hubradanordnung (26, 27, 28) gekoppelt sind.

3. Antriebsvorrichtung nach Anspruch 2, **dadurch gekennzeichnet, dass** die Antriebsverbindung zwischen Paddelgetriebe (30, 31, 32) und Hubradgetriebe (33, 34, 35) über beidseitige Winkeltriebe (19) erfolgt, die über den gemeinsamen Stirnrad-antrieb (17) von den Paddelantrieben (30, 31, 32) aus erfolgt.

4. Antriebsvorrichtung nach Anspruch 2 oder 3, **dadurch gekennzeichnet, dass** die Stirnräder (17, 17') in zentrischer Ausrichtung zur Längswelle (L) auf ein zentrales Getrieberad (15) des Hubradgetriebes (33, 34, 35) und von diesem über beidseitig angeordnete Winkeltriebe (19) an Verbindungswellen (20) zu den Hubrädern (6) angetrieben sind.

5. Antriebsvorrichtung nach Anspruch 3 oder 4, **dadurch gekennzeichnet, dass** die beiden die Hubradachsen bildenden Wellen (20, 20') auf Lagergehäusen (22, 22') sitzen, die mit den Lagerschilden der beiden Hubradelemente verschraubt sind und dass die beiden zu den Hubradelementen führenden, im Winkel zur Horizontalen geneigten Wellen (20, 20') nach außen abgedichtet sind.

6. Antriebsvorrichtung nach Anspruch 4 oder 5, **dadurch gekennzeichnet, dass** die Hubräder (25, 25') mittels Befestigungsschrauben am mit dem die Stirnräder (17, 17') aufnehmenden Nabenkörper (24, 24') befestigt sind.

7. Antriebsvorrichtung nach einem der Ansprüche 4, 5 oder 6, **dadurch gekennzeichnet, dass** eine durchgehende obere Antriebswelle (11) als Hauptantriebswelle die Paddel (9, 10) aufnimmt und dass ausgehend von der Hauptantriebswelle (11) der Antrieb der Hubräder (25, 25') in Einzelbauweise bzw. als Antriebseinheit erfolgt.

8. Antriebsvorrichtung nach einem der Ansprüche 1 - 7, **dadurch gekennzeichnet, dass** die Paddelanordnung (9, 10) aus zwei voneinander beabstandeten Paddelelementen (10', 10") besteht, die zwischen die Zinken (7) der beiden Hubräder der Hubradanordnung (26, 27, 28) beidseitig der Mittelachse (6) eingreifen.

9. Antriebsvorrichtung nach einem der Ansprüche 1 - 8, **dadurch gekennzeichnet, dass** die Getriebeanordnung (8) mittels Flanschträger (5) am Rahmen (4), z.B. über Halteschalen, befestigt ist.

## Claims

1. Drive apparatus for lifting wheels (6; 25, 25') of multi-row beet lifters, which are assigned to share bodies (1) and which pick up, raise and carry away the beets uprooted by the share bodies, the drive (33, 34, 35) of the lifting-wheel arrangement (26, 27, 28), which comprises two cooperating individual lifting wheels (25, 25'), being designed as an individual drive and as a unit for each lifting-wheel arrangement, and paddles (10), which are assigned to the individual lifting wheels to carry away the beets and are driven by transmissions (30, 31, 32), being driven by means of a common main drive shaft (11), **characterized in that** the paddles (10) are secured in pairs on the main drive shaft (11) and on the outside of the housing (13) of the respective paddle drive (30, 31, 32).

2. Drive apparatus according to Claim 1, **characterized in that** the paddle drives (30, 31, 32) are each coupled to the drive shaft (20) for the two lifting-wheel elements (25, 25') of a lifting-wheel arrangement (26, 27, 28) by means of spur wheels (17, 17') or the like.

3. Drive apparatus according to Claim 2, **characterized in that** the drive connection between the paddle transmission (30, 31, 32) and the lifting-wheel transmission (33, 34, 35) is made by means of angle drives (19) on both sides, which is accomplished via the common spur-wheel drive (17) from the paddle drives (30, 31, 32).

4. Drive apparatus according to Claim 2 or 3, **characterized in that** the spur wheels (17, 17') are driven in centric alignment with the longitudinal axis (L), the drive being transmitted to a central gearwheel (18) of the lifting-wheel transmission (33, 34, 35) and, from the latter, via angle drives (19) arranged on both sides to connecting shafts (20) leading to the lifting wheels (6).

5. Drive apparatus according to Claim 3 or 4, **characterized in that** the two shafts (20, 20') forming the lifting-wheel spindles are seated on bearing housings (22, 22'), which are screwed to the bearing plates of the two lifting-wheel elements, and **in that** the two shafts (20, 20'), which lead to the lifting-wheel elements and slope at an angle to the horizontal, are sealed off from the outside.

6. Drive apparatus according to Claim 4 or 5, **characterized in that** the lifting wheels (25, 25') are secured by means of fastening screws on the hub body (24, 24') that holds the spur wheels (17, 17').

7. Drive apparatus according to one of Claims 4, 5 or 6, **characterized in that** an upper drive shaft (11) that passes all the way through carries the paddles (9, 10) as the main drive shaft and that, from the main drive shaft (11), the lifting wheels (25, 25') are driven individually or as a drive unit.

8. Drive apparatus according to one of Claims 1-7, **characterized in that** the paddle arrangement (9, 10) comprises two mutually spaced paddle elements (10', 10''), which engage between the tines (7) of the two lifting wheels of the lifting-wheel arrangement (26, 27, 28) on both sides of the centre line (6).

9. Drive apparatus according to one of Claims 1-8, **characterized in that** the transmission arrangement (8) is secured on the frame (4) by means of flanged supports (5), e.g. via holding shells.

## Revendications

1. Dispositif d'entraînement pour les roues arracheurs de récolteuses à betteraves multirangs reliées à des corps de charrues (1) et recevant, soulevant et évacuant les betteraves arrachées par les corps de charrue, l'entraînement (33, 34, 35) du système (26, 27, 28) composé de deux roues arracheurs solidaires l'une de l'autre se présentant sous la forme d'un entraînement individuel et d'une unité pour système de roues arracheurs et des palettes d'éjection (10) reliées aux différentes roues arracheurs en vue de l'évacuation des betteraves étant entraînées par des un arbre primaire commun (11), via des palettes d'éjection (10) elles-mêmes entraînées par un mécanisme (30, 31, 32),
et **caractérisé en ce que** les palettes d'éjection (10) sont fixées en paires sur l'arbre primaire commun (11) et à l'extérieur, sur la gaine (13) de chaque entraînement de palettes (30, 31, 32).

2. Dispositif d'entraînement selon la revendication 1, **caractérisé en ce que** les entraînements des palettes d'éjection (30, 31, 32) sont reliés à l'arbre primaire (20) commun aux deux éléments à roues arracheurs (25, 25') d'un système de roues arracheurs (26, 27, 28), par l'intermédiaire de roues droites (17, 17') ou apparentées.

3. Dispositif selon la revendication 2, **caractérisé en ce que** la liaison d'entraînement entre le mécanisme des palettes d'éjection (30, 31, 32) et le mécanisme des roues arracheurs (33, 34, 35) est assurée, de chaque côté, par des commandes par engrenage d'angle (19) à partir des entraînements des palettes d'éjection (30, 31, 32) et via l'entraînement par roue droite commun.

4. Dispositif d'entraînement selon la revendication 2 ou 3, **caractérisé en ce que** les roues droites (17, 17') sont centrées par rapport à l'arbre longitudinal (L) sur une roue à engrenage (15) centrale du mécanisme à roues arracheurs (33, 34, 35) et entraînées par ledit mécanisme via des renvois d'angle (19) disposés des deux côtés d'arbres de raccordement (20) à des roues arracheurs (6).

5. Dispositif d'entraînement selon la revendication 3 ou 4, **caractérisé en ce que** les deux arbres (20, 20') formant les axes des roues arracheurs reposent sur des logements de palier (22, 22') vissés avec les flasques des deux éléments à roues arracheurs et **en ce que** les deux arbres (20, 20') menant aux éléments à roues arracheurs et tendant, dans la zone angulaire, à l'horizontale sont rendus étanches vers l'extérieur.

6. Dispositif d'entraînement selon la revendication 4 ou 5, **caractérisé en ce que** les roues arracheurs (25, 25') sont fixées à l'aide de vis de fixation à l'élément de moyeu (24, 24') recevant les roues droites (17, 17').

7. Dispositif d'entraînement selon une des revendications 4, 5 ou 6, **caractérisé en ce que** un arbre d'entraînement supérieur (11) pénétrant reçoit comme arbre d'entraînement principal les palettes d'éjection (9, 10) et **en ce que** l'entraînement des roues arracheurs (25, 25') au départ de l'arbre d'entraînement principal (11) se fait d'un seul tenant ou comme unité d'entraînement.

8. Dispositif d'entraînement selon une des revendications 1 à 7, **caractérisé en ce que** le système de palettes (9, 10) est composé de deux éléments à palettes (10', 10'') distants l'un de l'autre et s'engrenant entre les dents (7) des deux roues arracheurs du système à roues arracheurs (26, 27, 28), des deux côtés de l'axe central (6).

9. Dispositif d'entraînement selon une des revendications 1 à 8, **caractérisé en ce que** le système mécanique (8) est fixé à l'aide de supports à brides (5) contre le cadre (4), par l'intermédiaire de coquilles d'arrêt.
